# EUROPEAN PATENT APPLICATION

(11) **EP 4 481 292 A1**
(43) Date of publication of application: **25.12.2024**
(21) Application number: 23756316.8
(22) Date of filing: 13.02.2023
(51) Int. Cl.: F24F 11/88

(54) **AIR CONDITIONER**

(30) Priority: 17.02.2022 JP 2022023022
(71) Applicant: DAIKIN INDUSTRIES, LTD., Osaka-shi, Osaka 530-0001 (JP)
(72) Inventor: KOYAMA, Yohei, Osaka-shi, Osaka 530-0001 (JP); YAMAMOTO, Ryosuke, Osaka-shi, Osaka 530-0001 (JP); KOGAWA, Taiki, Osaka-shi, Osaka 530-0001 (JP); ANDO, Kazuaki, Osaka-shi, Osaka 530-0001 (JP); HIGASHIYAMA, Shin, Osaka-shi, Osaka 530-0001 (JP); HOTTA, Kosuke, Osaka-shi, Osaka 530-0001 (JP)
(74) Representative: Hoffmann Eitle
(86) International application number: PCT/JP2023/004726
(87) International publication number: WO 2023/157791

(57) **Abstract**

In an air conditioner using a power supply wiring connected between an outdoor unit and an indoor unit for communication between the indoor unit and the outdoor unit, noise transmitted from the power supply wiring to a power supply due to the communication is reduced. An indoor unit (12) has power input terminals (IT1, IT2) that receives power supply. An outdoor unit (11) is connected to a first power supply (901) and includes power supply terminals (OT1, OT2) that supplies power from the first power supply (901). In an air conditioner (1), in order to supply power from the outdoor unit (11) to the indoor unit (12), in some cases, the power input terminal (IT1) and a power supply terminal (OT1) are connected by a first power supply line (PL1), and a first communication device (20) and a second communication device (30) are connected by a first signal line (SL1). In this case, the air conditioner (1) has a first communication mode in which the first communication device (20) performs first wired communication by using the first signal line (SL1) and the first power supply line (PL1), and the second communication device (30) performs second wired communication by using the first signal line (SL1) and the first power supply line (PL1).

## Description

### TECHNICAL FIELD

The present disclosure relates to an air conditioner including a first communication device and a second communication device that perform communication between an outdoor unit and an indoor unit.

### BACKGROUND ART

As described in Patent Literature 1 (JP 2005-127579 A), for example, a conventional air conditioner including an outdoor unit and an indoor unit uses power lines (power supply wiring) that supply power to the outdoor unit and the indoor unit for communication between the outdoor unit and the indoor unit in some cases.

### SUMMARY OF THE INVENTION

### <Technical Problem>

The air conditioner described in Patent Literature 1 employs a configuration that converts a signal transmitted through the power lines into a radio signal in communication using the power lines between the outdoor unit and the indoor unit. However, in the air conditioner described in Patent Literature 1, a signal for communication is transmitted by the power lines, and noise caused by the signal superimposed on the power lines for communication is transmitted to a power supply, which is not different from the conventional technique.

An air conditioner using a power supply wiring connected between an outdoor unit and an indoor unit for communication between the indoor unit and the outdoor unit has a problem of reducing noise transmitted from the power supply wiring to a power supply due to the communication.

### <Solution to Problem>

An air conditioner according to a first aspect includes an indoor unit, an outdoor unit, a first communication device, and a second communication device. The indoor unit has power input terminals that receive power supply. The outdoor unit is connected to a first power supply and includes power supply terminals that supply power from the first power supply. The first communication device is a device that performs first wired communication by a current loop. The second communication device is a device that performs second wired communication by a first voltage signal. The air conditioner has a first communication mode in which, when the power input terminal and the power supply terminal are connected by a first power supply line in order to supply power from the outdoor unit to the indoor unit, and the indoor unit and the outdoor unit are connected by a first signal line in the first communication device and the second communication device, the first communication device performs first wired communication by using the first signal line and the first power supply line, and the second communication device performs second wired communication by using the first power supply line and the first signal line.

In the air conditioner according to the first aspect, since the first wired communication and the second wired communication are performed by using the first power supply line and the first signal line, noise generated in the communication is less likely to be transmitted to the first power supply than in a case where only a power supply wiring is used for the first wired communication and the second wired communication.

An air conditioner according to a second aspect is the air conditioner according to the first aspect, in which the outdoor unit includes an internal wiring between the second communication device and the first power supply, and a filter that is disposed in the internal wiring and reduces noise having the same frequency as a frequency of the first voltage signal.

The air conditioner according to the second aspect can reduce the first voltage signal transmitted from the second communication device to the first power supply by the filter.

An air conditioner according to a third aspect is the air conditioner according to the first or second aspect, and further includes a first electric component connected between the outdoor unit and the first power supply, in which the first electric component increases a value of an impedance of a wiring viewed from the outdoor unit toward the first power supply for the same frequency as the first voltage signal.

In the air conditioner according to the third aspect, since the value of the impedance for the same frequency as the frequency of the first voltage signal can be increased by the first electric component, the first voltage signal transmitted from the second communication device to the first power supply can be reduced.

An air conditioner according to a fourth aspect is the air conditioner according to any one of the first to third aspects, in which the first voltage signal is a differential signal.

In the air conditioner according to the fourth aspect, since the first voltage signal is a differential signal and is a signal that generates a potential difference between the first power supply line and the first signal line, a change in the potential difference generated between the first power supply line and a line other than the first signal line by the first voltage signal is reduced, and it is therefore possible to suppress the noise caused by the first voltage signal from being transmitted to the first power supply.

An air conditioner according to a fifth aspect is the air conditioner according to any of the first to fourth aspects, in which the indoor unit includes a second electric component that disconnects connection between the second communication device and the power input terminals when a second power supply is connected to the power input terminals.

In the air conditioner according to the fifth aspect, the second electric component can block noise transmitted from the second communication device to the second power supply.

An air conditioner according to a sixth aspect is the air conditioner according to the fifth aspect, and has a second communication mode in which the second communication device performs third wired communication by a second voltage signal having a lower voltage than the first voltage signal by using a second signal line connecting the outdoor unit and the indoor unit and being different from the first signal line.

In the air conditioner according to the sixth aspect, noise caused by the second voltage signal used in the third wired communication can be blocked by the second electric component.

### BRIEF DESCRIPTION OF THE DRAWINGS

FIG. 1 is a conceptual diagram showing an example of a configuration of an air conditioner according to an embodiment.
FIG. 2 is a conceptual diagram showing a second example of a configuration of an air conditioner according to an embodiment.
FIG. 3 is a block diagram showing an example of a configuration of an outdoor unit and an indoor unit.
FIG. 4 is a block diagram showing an example of a configuration of a plurality of indoor units.
FIG. 5 is a block diagram showing another example of the configuration of the outdoor unit and the indoor unit.
FIG. 6 is a flowchart showing an example of a determination procedure of the air conditioner in which the indoor unit is incorporated.
FIG. 7 is a flowchart showing an example of behavior of the air conditioner for system recognition.
FIG. 8 is a diagram for describing a path through which a first voltage signal output from a second communication device flows toward a first power supply when a power supply wiring is connected.
FIG. 9 is a diagram for describing a path through which the first voltage signal output from a second communication device flows toward a second power supply when a power supply wiring is not connected.

### DESCRIPTION OF EMBODIMENTS

### (1) Overall configuration of air conditioner

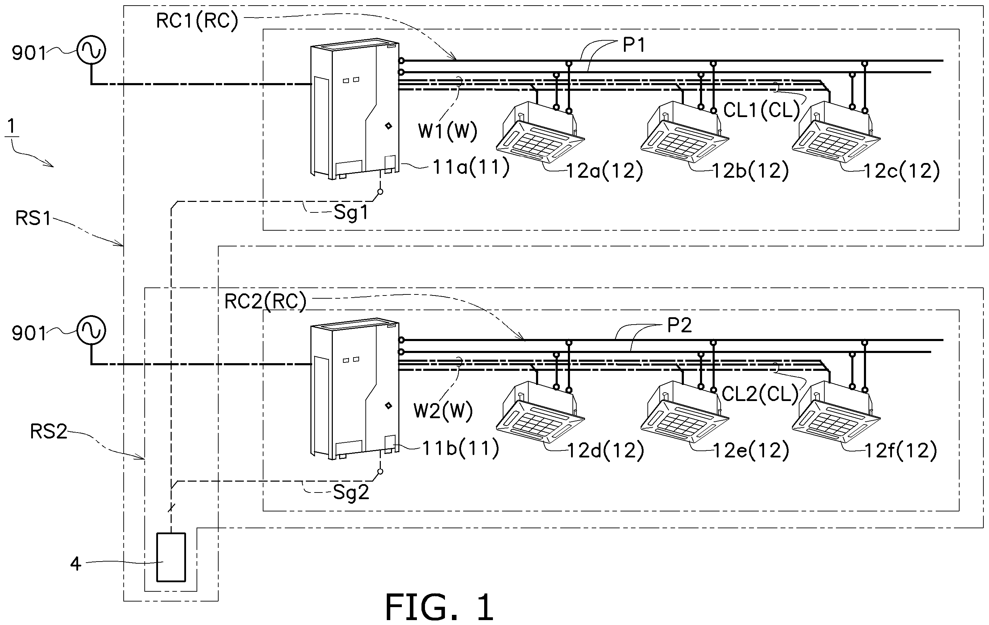

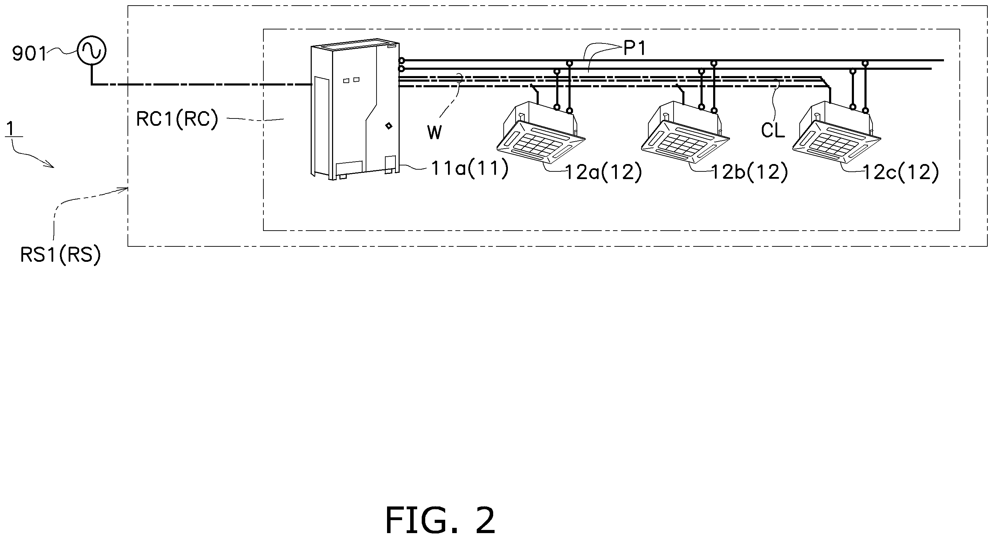

A schematic configuration of an air conditioner 1 will be described with reference to FIGS. 1 and 2. FIG. 1 shows the air conditioner 1 including a plurality of refrigerant systems, a plurality of outdoor units 11, a plurality of indoor units 12, and a centralized controller 4. FIG. 2 shows the air conditioner 1 including one refrigerant system and including one outdoor unit 11 and a plurality of indoor units 12.

### (1-1) Air conditioner to which centralized controller is connected

The air conditioner 1 shown in FIG. 1 includes the plurality of outdoor units 11, the plurality of indoor units 12, and the centralized controller 4. In the air conditioner 1, the plurality of outdoor units 11 and the plurality of indoor units 12 are connected by a current loop wiring CL so as to be communicable with each other. In the air conditioner 1, the plurality of outdoor units 11 and the centralized controller 4 are connected by signal wirings Sg1 and Sg2 so as to be communicable with each other.

The air conditioner 1 is, for example, an air conditioner for business use. In the air conditioner 1, the outdoor unit 11 is connected to a first power supply 901, and power is supplied from the first power supply 901 to the outdoor unit 11. In the air conditioner 1, power is supplied to the indoor unit 12 from the first power supply 901 via the outdoor unit 11. Therefore, in the air conditioner 1, the outdoor unit 11 and the indoor unit 12 are connected by the power supply wiring W. The first power supply 901 is, for example, a commercial power supply. The connection to the first power supply 901 is performed by using, for example, a distribution board.

The plurality of outdoor units 11 include a first outdoor unit 11a and a second outdoor unit 11b. The plurality of indoor units 12 include a first indoor unit 12a, a second indoor unit 12b, a third indoor unit 12c, a fourth indoor unit 12d, a fifth indoor unit 12e, and a sixth indoor unit 12f. The air conditioner 1 includes a first refrigerant system RS1 and a second refrigerant system RS2 which are two refrigerant systems.

The first outdoor unit 11a, the first indoor unit 12a, the second indoor unit 12b, and the third indoor unit 12c form a first refrigerant circuit RC1 that is a core of the first refrigerant system RS1. The first outdoor unit 11a, the first indoor unit 12a, the second indoor unit 12b, and the third indoor unit 12c are connected by a refrigerant pipe P1, and the same refrigerant circulates in the outdoor unit 11 and the indoor unit 12. The first refrigerant system RS1 includes the centralized controller 4 which is used for management or operation of the first refrigerant circuit RC1.

The second outdoor unit 11b, the fourth indoor unit 12d, the fifth indoor unit 12e, and the sixth indoor unit 12f form a second refrigerant circuit RC2 that is a core of the second refrigerant system RS2. The second outdoor unit 11b, the fourth indoor unit 12d, the fifth indoor unit 12e, and the sixth indoor unit 12f are connected by a refrigerant pipe P2, and the same refrigerant circulates in the outdoor unit 11 and the indoor unit 12. The second refrigerant system RS2 includes the centralized controller 4 which is used for management or operation of the second refrigerant circuit RC2.

The refrigerant pipe P1 and the refrigerant pipe P2 are not connected and are independent of each other. In other words, the plurality of outdoor units 11 and the plurality of indoor units 12 belonging to the plurality of refrigerant systems RS constitute a plurality of independent refrigerant circuits RC.

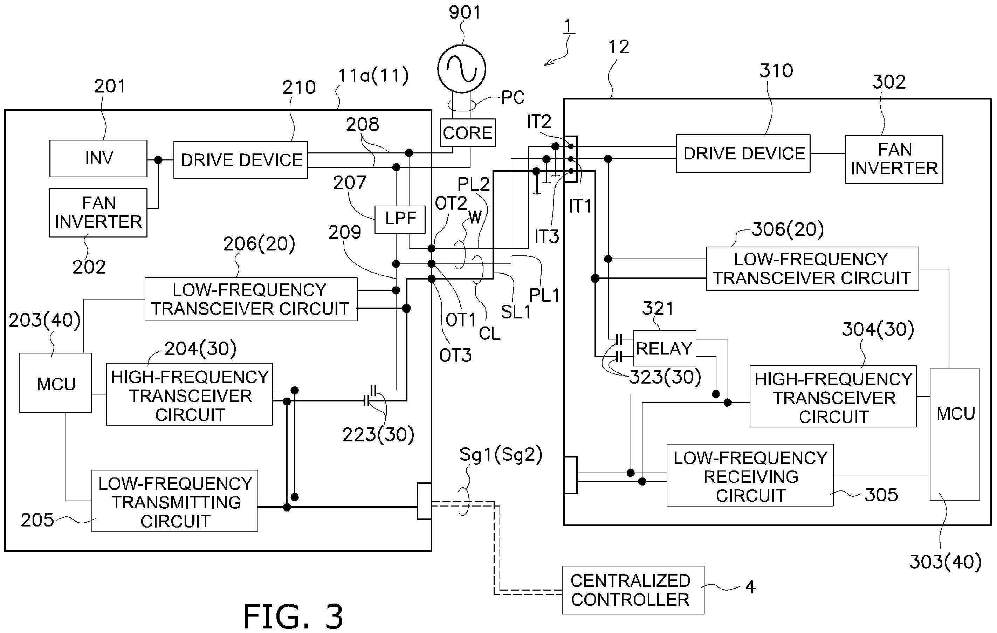

The first outdoor unit 11a, the first indoor unit 12a, the second indoor unit 12b, and the third indoor unit 12c belonging to the first refrigerant system RS1 are connected to a power supply wiring W1 so as to be able to supply power from the first outdoor unit 11a to the first indoor unit 12a, the second indoor unit 12b, and the third indoor unit 12c. The first outdoor unit 11a, the first indoor unit 12a, the second indoor unit 12b, and the third indoor unit 12c belonging to the first refrigerant system RS1 are connected so as to be communicable with each other via a current loop wiring CL1. The power supply wiring W1 and the current loop wiring CL1 share one or more lines, such as a first power supply line PL1 (see FIG. 3). The centralized controller 4 and the first outdoor unit 11a belonging to the first refrigerant system RS1 are connected so as to be communicable with each other via the signal wiring Sg1.

The second outdoor unit 11b and the fourth indoor unit 12d, the fifth indoor unit 12e, and the sixth indoor unit 12f belonging to the second refrigerant system RS2 are connected to a power supply wiring W2 so as to be able to supply power from the second outdoor unit 11b to the fourth indoor unit 12d, the fifth indoor unit 12e, and the sixth indoor unit 12f. The second outdoor unit 11b, the fourth indoor unit 12d, the fifth indoor unit 12e, and the sixth indoor unit 12f belonging to the second refrigerant system RS2 are connected so as to be communicable with each other via a current loop wiring CL2. The power supply wiring W2 and the current loop wiring CL2 share one or more lines, such as the first power supply line PL1 (see FIG. 3). However, the first power supply line PL1 of the current loop wiring CL1 and the first power supply line PL1 of the current loop wiring CL2 are different lines. The centralized controller 4 and the second outdoor unit 11b belonging to the second refrigerant system RS2 are connected to be communicable with each other via the signal wiring Sg2.

The outdoor unit 11 and the plurality of indoor units 12 mutually transmit and receive data by communication via the current loop wiring CL and the signal wirings Sg1 and Sg2 in order to perform target air conditioning for a target space. The first outdoor unit 11a, the first indoor unit 12a, the second indoor unit 12b, and the third indoor unit 12c belonging to the first refrigerant system RS1 transmit and receive data to and from each other by the current loop wiring CL1, and the centralized controller 4 and the first outdoor unit 11a belonging to the first refrigerant system RS1 transmit and receive data to and from each other by the signal wiring Sg1, to perform target air conditioning in the target space. The second outdoor unit 11b, the fourth indoor unit 12d, the fifth indoor unit 12e, and the sixth indoor unit 12f belonging to the second refrigerant system RS2 transmit and receive data to and from each other by the current loop wiring CL2, and the centralized controller 4 and the second outdoor unit 11b belonging to the second refrigerant system RS2 transmit and receive data to and from each other by the signal wiring Sg2, in order to perform target air conditioning in the target space.

### (1-2) Air conditioner without centralized controller

The air conditioner 1 shown in FIG. 2 includes one outdoor unit 11 and a plurality of indoor units 12. In the air conditioner 1 shown in FIG. 2, the outdoor unit 11 is connected to the first power supply 901, and power is supplied from the first power supply 901 to the outdoor unit 11. In the air conditioner 1, power is also supplied to the indoor unit 12 from the first power supply 901 via the outdoor unit 11. Therefore, in the air conditioner 1, the outdoor unit 11 and the indoor unit 12 are connected by the power supply wiring W.

In the air conditioner 1, one outdoor unit 11 and the plurality of indoor units 12 are connected so as to be communicable with each other via the current loop wiring CL. The power supply wiring W and the current loop wiring CL share one or more lines, such as the first power supply line PL1 (see FIG. 3). The outdoor unit 11 and the plurality of indoor units 12 mutually transmit and receive data by communication via the current loop wiring CL in order to perform target air conditioning for a target space. The air conditioner 1 shown in FIG. 1 differs from the air conditioner 1 shown in FIG. 2 in whether the air conditioner 1 includes the centralized controller 4 and whether the air conditioner 1 includes a plurality of refrigerant systems RS or a single refrigerant system RS. Although not shown, the centralized controller 4 may be connected to only the indoor unit 12, for example. When the centralized controller 4 is connected only to the indoor unit 12, the centralized controller 4 may be configured to indirectly communicate with one of the outdoor unit 11 or the indoor unit 12 via the other one of the outdoor unit 11 or the indoor unit 12.

The plurality of indoor units 12 include the first indoor unit 12a, the second indoor unit 12b, and the third indoor unit 12c. Here, a case where the air conditioner 1 includes the first refrigerant system RS1 which is one refrigerant system will be described, but a plurality of refrigerant systems may be provided similarly to the air conditioner 1 shown in FIG. 1.

The outdoor unit 11, the first indoor unit 12a, the second indoor unit 12b, and the third indoor unit 12c form a first refrigerant circuit RC1 that is a core of the first refrigerant system RS1. The outdoor unit 11, the first indoor unit 12a, the second indoor unit 12b, and the third indoor unit 12c are connected by the refrigerant pipe P1, and the same refrigerant circulates in the outdoor unit 11, the first indoor unit 12a, the second indoor unit 12b, and the third indoor unit 12c. In other words, the outdoor unit 11 and the plurality of indoor units 12 belonging to the refrigerant system RS constitute the refrigerant circuit RC.

### (1-3) Outline of behavior of air conditioner

In the air conditioner 1, for example, the outdoor unit 11 includes a compressor (not shown), a first heat exchanger (not shown), and an expansion valve (not shown) constituting the refrigerant circuit RC, and the indoor unit 12 includes a second heat exchanger (not shown) constituting the refrigerant circuit RC. In the air conditioner 1 configured to perform a cooling operation, for example, a refrigerant returns to the compressor through the compressor, the first heat exchanger, the expansion valve, and the second heat exchanger in the refrigerant circuit RC. The refrigerant circuit RC achieves a vapor compression refrigeration cycle. In this case, the refrigerant in a gas state is compressed by the compressor and discharged. In the first heat exchanger, the compressed high-temperature and high-pressure refrigerant exchanges heat with outdoor air to dissipate heat. In the expansion valve, the refrigerant having dissipated heat is decompressed and expanded. In the second heat exchanger of the indoor unit 12, the decompressed and expanded refrigerant exchanges heat with indoor air to absorb heat. At this time, cooling is performed by the indoor air cooled by heat exchange with the refrigerant. In the compressor, the refrigerant that has absorbed heat and gasified is compressed and discharged again to the first heat exchanger.

In the air conditioner 1 configured to perform a heating operation, for example, a refrigerant returns to the compressor through the compressor, the second heat exchanger, the expansion valve, and the first heat exchanger in the refrigerant circuit RC. The refrigerant circuit RC achieves a vapor compression refrigeration cycle. In this case, the refrigerant in a gas state is compressed by the compressor and discharged. In the second heat exchanger of the indoor unit 12, the compressed high-temperature and high-pressure refrigerant exchanges heat with indoor air to dissipate heat. At this time, heating is performed by the indoor air heated by heat exchange with the refrigerant. In the expansion valve, the refrigerant having dissipated heat is decompressed and expanded. In the first heat exchanger, the decompressed and expanded refrigerant exchanges heat with outdoor air to absorb heat. In the compressor, the refrigerant that has absorbed heat and gasified is compressed and discharged again to the second heat exchanger.

The air conditioner 1 may include a four-way valve that switches a circulation direction of the refrigerant in the refrigerant circuit RC so as to perform both the cooling operation and the heating operation.

### (2) Detailed configuration

### (2-1) Outdoor unit 11

FIG. 3 shows an example of an internal configuration mainly related to an electric system in an internal configuration of the outdoor unit 11. The outdoor unit 11 includes a drive device 210 for receiving power from the first power supply 901 and supplying power to devices inside the outdoor unit 11. The outdoor unit 11 includes an inverter 201, a fan inverter 202, a micro-control unit (MCU) 203, a high-frequency transceiver circuit 204, a low-frequency transmitting circuit 205, and a low-frequency transceiver circuit 206. The drive device 210 supplies power to the inverter 201 and the fan inverter 202 to drive the inverter 201 and the fan inverter 202. The inverter 201 supplies power for driving, for example, the compressor (not shown) to the compressor. The fan inverter 202 is an inverter for activating a fan (not shown) that generates an airflow of outdoor air in an outdoor heat exchanger (not shown) provided in the outdoor unit 11. The MCU 203 functions as a control unit for controlling internal devices of the outdoor unit 11. The MCU 203 of the outdoor unit 11 constitutes a controller 40 together with the MCU 303 described later of the indoor unit 12. The controller 40 is implemented by a computer. The MCUs 203 and 303 constituting the controller 40 is a microcontroller including a control calculator and a storage. The control calculator may be a processor such as a CPU or a GPU. The control calculator reads out a program stored in the storage and performs predetermined image processing and calculation processing in accordance with the program. Furthermore, the control calculator can write a calculation result to the storage and read information stored in the storage in accordance with the program.

The power supply wiring W for supplying power from the outdoor unit 11 to the indoor unit 12 is connected to the outdoor unit 11. The outdoor unit 11 includes power supply terminals OT1 and OT2 to which the power supply wiring W is connected. In addition, a terminal OT3 to which a first signal line SL1 is connected is provided. The outdoor unit 11 includes a low pass filter 207. The low pass filter 207 is connected between the first power supply 901 and the power supply wiring W. The outdoor unit 11 includes, inside the outdoor unit 11, an internal wiring 208 that connects the first power supply 901 to the drive device 210 and an internal wiring 209 that connects the first power supply 901 to the power supply wiring W via the low pass filter 207. The low pass filter 207 reduces high-frequency noise having the same frequency as the frequency of a high-frequency signal transmitted through the power supply wiring W. The low pass filter 207 blocks a high-frequency signal transmitted from the power supply wiring W toward the first power supply 901. For example, a common mode choke coil can be used as the low pass filter 207. The power supply wiring W includes two lines of the first power supply line PL1 and the second power supply line PL2. The first power supply line PL1 is a first line used for current loop communication in the power supply wiring W. The first power supply line PL1 is connected to the power supply terminal OT1, and the second power supply line PL2 is connected to the power supply terminal OT2.

The outdoor unit 11 forms the current loop wiring CL with the indoor unit 12 by using the first power supply line PL1 in the power supply wiring W and the first signal line SL1 other than the power supply wiring W. The outdoor unit 11 transmits and receives a low-frequency current signal via the current loop wiring CL by using the low-frequency transceiver circuit 206. In other words, the low-frequency transceiver circuit 206 is included in a first communication device 20 that performs current loop communication by using the current loop wiring CL.

The high-frequency transceiver circuit 204 is connected to the current loop wiring CL. The high-frequency transceiver circuit 204 can perform multi-channel communication via the current loop wiring CL. The high-frequency transceiver circuit 204 is included in a second communication device 30 that performs multi-channel communication by using the current loop wiring CL. A high-frequency voltage signal (first voltage signal) output from the high-frequency transceiver circuit 204 is a differential signal. Therefore, the original signal is delivered by using one of the first power supply line PL1 or the first signal line SL1, and the signal having the opposite phase is transmitted by using the other line.

The outdoor unit 11 includes a coupling capacitor 223. The high-frequency transceiver circuit 204 is connected to the current loop wiring CL via the coupling capacitor 223. The coupling capacitor 223 is a circuit that provides insulation from a high voltage portion (a portion to which a voltage related to the first power supply 901 is applied) and allows a high-frequency transceiver signal of the high-frequency transceiver circuit 204 to pass through in order to transmit and receive the high-frequency voltage signal. The coupling capacitor 223 enables multi-channel communication via the current loop wiring CL for communication using a change in voltage. The high-frequency transceiver circuit 204 is included in a second communication device 30 that performs multi-channel communication by using the current loop wiring CL. The coupling capacitor 223 blocks a low-frequency signal transmitted from the low-frequency transmitting circuit 205 so that the low-frequency signal is not transmitted to the high voltage portion.

The high-frequency transceiver circuit 204 of the outdoor unit 11 is connected to the signal wiring Sg1 (or Sg2). The low-frequency transmitting circuit 205 of the outdoor unit 11 is connected to the signal wiring Sg1 (or Sg2). The high-frequency transceiver circuit 204 can perform multi-channel communication through the signal wiring Sg1 (or Sg2). The low-frequency transmitting circuit 205 of the outdoor unit 11 can transmit a low-frequency signal through the signal wiring Sg1 (or Sg2).

### (2-2) Indoor unit 12

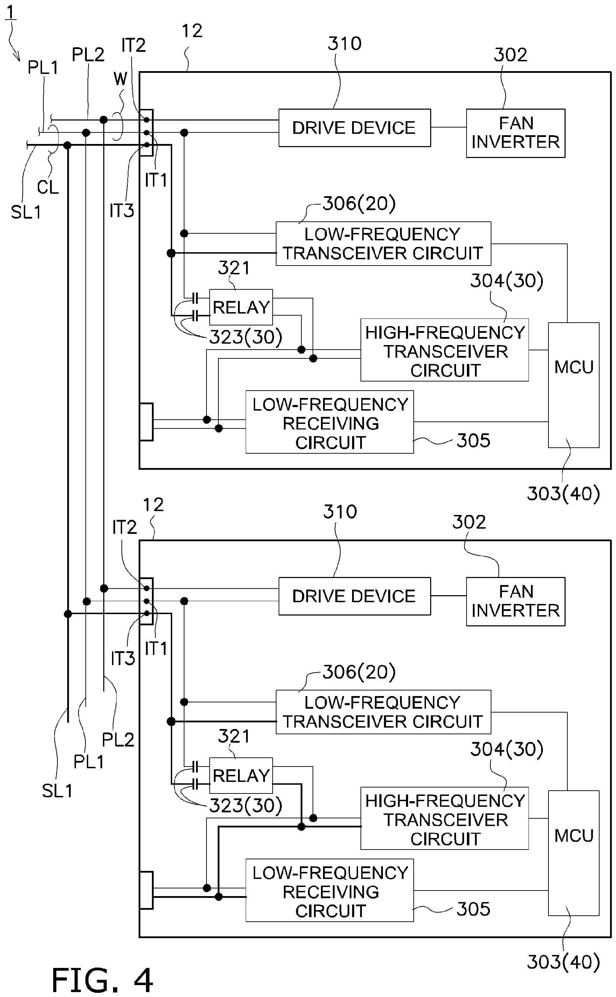

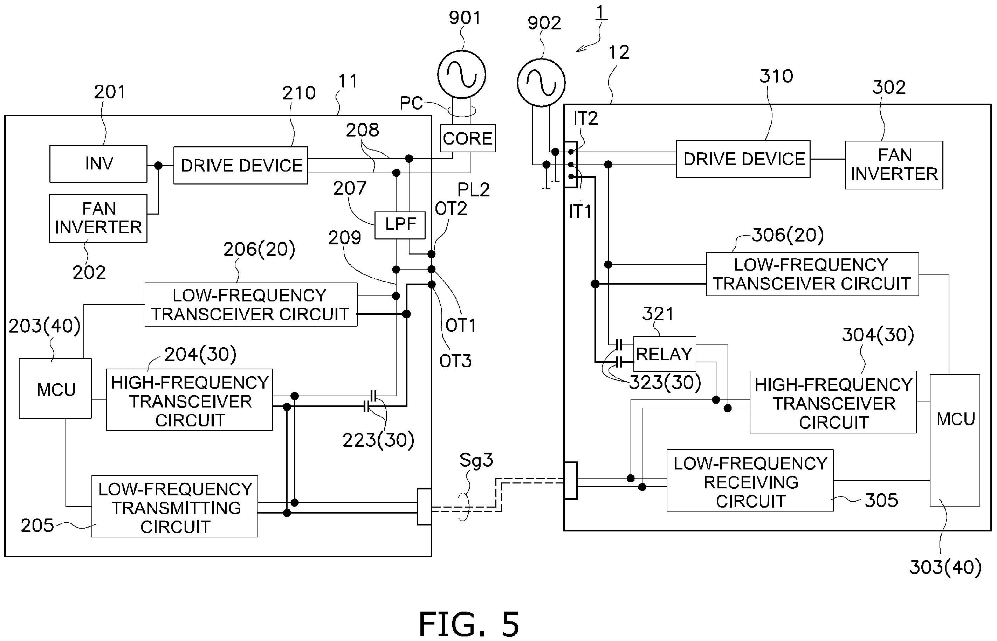

FIGS. 3 and 4 show an example of an internal configuration mainly related to an electric system in an internal configuration of the indoor unit 12. The indoor unit 12 includes a drive device 310 that receives power from the first power supply 901 via the outdoor unit 11 and supplies the power to the devices inside the indoor unit 12. Therefore, the indoor unit 12 includes power input terminals IT1 and IT2 connected to the power supply wiring W connected to the power supply terminals OT1 and OT2 of the outdoor unit 11. The first power supply line PL1 of the power supply wiring W is connected to the power input terminal IT1, and the second power supply line PL2 is connected to the power input terminal IT2. As shown in FIG. 5, the drive device 310 can also receive power supply by directly connecting the power input terminals IT1 and IT2 to the second power supply 902. However, when the indoor unit 12 is directly supplied with power from the second power supply 902, the outdoor unit 11 and the indoor unit 12 are not connected by the power supply wiring W, and thus, communication between the outdoor unit 11 and the indoor unit 12 using the current loop wiring CL cannot be performed. When communication between the outdoor unit 11 and the indoor unit 12 using the current loop wiring CL cannot be performed, for example, as shown in FIG. 5, communication via a signal wiring Sg3 connecting the outdoor unit 11 and the indoor unit 12 is performed between the outdoor unit 11 and the indoor unit 12. In the configuration shown in FIG. 5, for example, the centralized controller 4 can be connected to one of the outdoor unit 11 or the indoor unit 12.

The outdoor unit 11 shown in FIG. 3 can be regarded as, for example, the first outdoor unit 11a of the first refrigerant system RS1 shown in FIG. 1 or 2. The indoor unit 12 shown in FIGS. 3 and 4 can be regarded as, for example, the first indoor unit 12a, the second indoor unit 12b, and the third indoor unit 12c of the first refrigerant system RS1 shown in FIG. 1 or 2. Furthermore, the outdoor unit 11 shown in FIG. 3 can be regarded as, for example, the second outdoor unit 11b of the second refrigerant system RS2 shown in FIG. 1. The indoor unit 12 shown in FIGS. 3 and 4 can be regarded as, for example, the fourth indoor unit 12d, the fifth indoor unit 12e, and the sixth indoor unit 13f of the second refrigerant system RS2 shown in FIG. 1. Alternatively, the outdoor unit 11 shown in FIG. 4 can be regarded as, for example, the second outdoor unit 11b of the second refrigerant system RS2 shown in FIG. 1. The indoor unit 12 shown in FIGS. 4 and 5 can be regarded as, for example, the fourth indoor unit 12d, the fifth indoor unit 12e, and the sixth indoor unit 12f of the second refrigerant system RS2 shown in FIG. 1.

The indoor unit 12 includes a fan inverter 302, an MCU 303, a high-frequency transceiver circuit 304, a low-frequency receiving circuit 305, and a low-frequency transceiver circuit 306. The drive device 310 supplies power to the fan inverter 302 to drive the fan inverter 302. The fan inverter 302 is an inverter for activating a fan (not shown) that generates an airflow of indoor air in an indoor heat exchanger (not shown) provided in the indoor unit 12. The MCU 303 functions as a control unit for control of internal devices of each indoor unit 12.

The indoor unit 12 forms the current loop wiring CL with the outdoor unit 11 by using the first power supply line PL1 in the power supply wiring W and the first signal line SL1 other than the power supply wiring W. The indoor unit 12 can transmit and receive a low-frequency current signal via the current loop wiring CL by using the low-frequency transceiver circuit 306. The low-frequency transceiver circuit 306 and the low-frequency transceiver circuit 206 constitute the first communication device 20. The frequency of the signal used for communication by the first communication device 20 (the low-frequency transceiver circuit 306 and the low-frequency transceiver circuit 206) is lower than the frequency of the signal used for communication by the second communication device 30 (including the high-frequency transceiver circuits 204 and 304) described later.

The indoor unit 12 includes a coupling capacitor 323. The high-frequency transceiver circuit 304 is connected to the current loop wiring CL via the coupling capacitor 323. The coupling capacitor 323 is a circuit that provides insulation from a high voltage portion (a portion related to a voltage applied to the terminals IT1 and IT3) and allows a high-frequency transceiver signal of the high-frequency transceiver circuit 304 to pass through in order to transmit and receive the high-frequency voltage signal. The coupling capacitor 323 enables multi-channel communication via the current loop wiring CL for communication using a change in voltage. The coupling capacitor 323 blocks a low-frequency signal transmitted to the low-frequency receiving circuit 305 so as not to be transmitted to the high voltage portion. The high-frequency transceiver circuit 304 is included in the second communication device 30 that performs multi-channel communication by using the current loop wiring CL. The high-frequency transceiver circuit 304, the coupling capacitor 323, the coupling capacitor 223, and the high-frequency transceiver circuit 204 constitute a second communication device 30.

The indoor unit 12 includes a relay 321. The relay 321 of the indoor unit 12 functions as a second electric component that disconnects the connection between the second communication device 30 and the power input terminals IT1 and IT2 when the second power supply 902 as the second power supply is connected to the power input terminals IT1 and IT2. For example, the relay 321 is configured to disconnect the connection between the second communication device 30 and the power input terminals IT1 and IT2 in response to an instruction from the MCU 303 when the MCU303 is notified that transmission and reception via the current loop wiring CL cannot be performed in the low-frequency transceiver circuit 306.

When the second power supply 902 as the second power supply is connected to the power input terminals IT1 and IT2, the high-frequency transceiver circuit 304 of the indoor unit 12 is connected to the signal wiring Sg3. In this case, the outdoor unit 11 and the indoor unit 12 are connected by the signal wiring Sg3. In the outdoor unit 11, the high-frequency transceiver circuit 204 and the low-frequency transmitting circuit 205 are connected to the signal wiring Sg3. The low-frequency receiving circuit 305 of the indoor unit 12 is connected to the signal wiring Sg3. The high-frequency transceiver circuit 304 can perform multi-channel communication with the high-frequency transceiver circuit 204 of the outdoor unit 11 through the signal wiring Sg3. The low-frequency receiving circuit 305 of the indoor unit 12 can receive a low-frequency signal from the low-frequency transmitting circuit 205 of the outdoor unit 11 through the signal wiring Sg3. The low-frequency signal and the high-frequency signal transmitted and received through the signal wiring Sg3 are voltage signals for delivering information through a change in voltage. The frequency of the signal transmitted and received by the high-frequency transceiver circuit 304 is higher than the frequency of the signal received by the low-frequency receiving circuit 305.

### (2-3) Core 15

The air conditioner 1 includes a core 15 as a first electric component connected between the outdoor unit 11 and a first power supply 901 as a first power supply. The core 15 is an electric component that increases the value of an impedance of a wiring as viewed from the outdoor unit 11 toward the first power supply 901. The core 15 is attached to, for example, a power supply cable PC of the outdoor unit 11. The core 15 increases the value of an impedance for the same frequency as the voltage signal (first voltage signal) transmitted by the high-frequency transceiver circuit 204. The core 15 is, for example, a ferrite core. The core 15 suppresses delivery of a high-frequency signal (high-frequency noise) from the outdoor unit 11 to the first power supply 901. In particular, the core 15 suppresses delivery of the voltage signal transmitted by the high-frequency transceiver circuit 204 to the first power supply 901 as noise.

### (3) Operations of air conditioner 1 related to communication

### (3-1) Connection determination of configuration of air conditioner 1

The MCU 303 of the indoor unit 12 of the air conditioner 1 makes selection regarding use of the low-frequency receiving circuit 305, the low-frequency transceiver circuit 306, and the high-frequency transceiver circuit 304, in order to perform air conditioning in cooperation with the outdoor unit 11. The MCU 303 of the indoor unit 12 determines the configuration of the air conditioner 1 in order to perform air conditioning in cooperation with the outdoor unit 11. The high-frequency transceiver circuit 304 may transmit and receive a voltage signal via the current loop wiring CL, or may transmit and receive a voltage signal via the signal wiring Sg3.

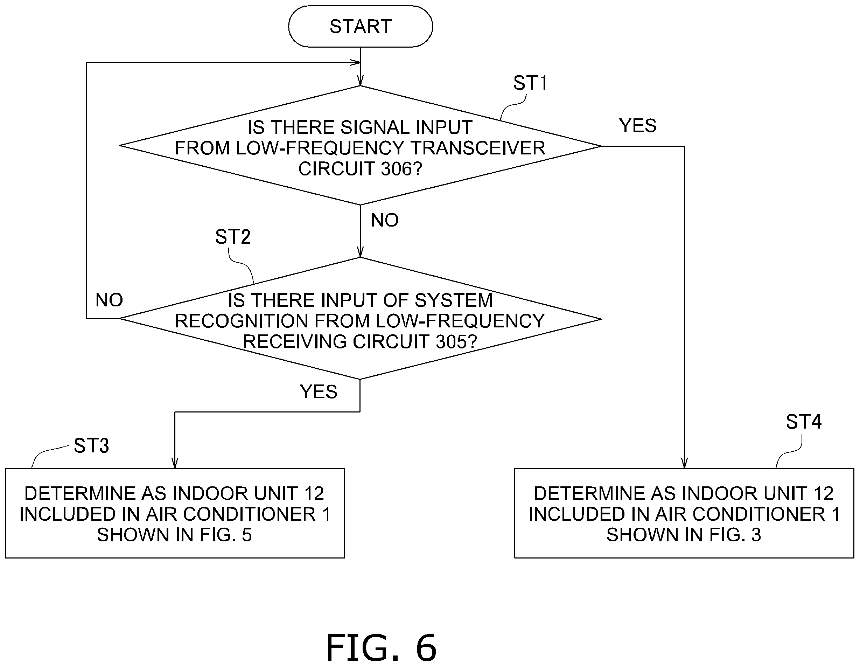

The MCU 303 of the indoor unit 12 determines the configuration of the air conditioner 1, for example, in accordance with a determination flow shown in FIG. 6. First, it is determined whether there is an input signal from the low-frequency transceiver circuit 306 (step ST1). In other words, it is determined whether a current signal is received by using the current loop wiring CL. If there is no input signal from the low-frequency transceiver circuit 306 (No in step ST1), the MCU 303 determines whether there is an input of system recognition from the low-frequency receiving circuit 305 (step ST2). If there is an input of system recognition from the low-frequency receiving circuit 305 (Yes in step ST2), the MCU 303 determines that the air conditioner 1 includes the indoor unit 12 connected to the second power supply 902 that is the second power supply as shown in FIG. 5 (step ST3). The air conditioner 1 shown in FIG. 5 is an air conditioner having a configuration in which the indoor unit 12 and the outdoor unit 11 communicate with each other by using the signal wiring Sg3. If determining that there is no input of system recognition from the low-frequency receiving circuit 305 (No in step ST2), the MCU 303 returns to step ST1 and repeats the determination.

When determining that there is an input signal from the low-frequency transceiver circuit 306 (Yes in step ST1), the MCU 303 determines that the indoor unit 12 is included in the air conditioner 1 shown in FIG. 3 (step ST4). In other words, the air conditioner 1 shown in FIG. 3 is an air conditioner having a configuration in which the indoor unit 12 and the outdoor unit 11 communicate with each other by using the current loop wiring CL. As a configuration for communication between the indoor unit 12 and the outdoor unit 11, the air conditioner 1 in FIGS. 1 and 2 has the configuration of the air conditioner 1 shown in FIG. 3.

### (3-2) Selection related to communication of indoor unit 12

The MCU 303 of the indoor unit 12 selects a communication circuit to be used for communication of the indoor unit 12, on the basis of the determination results of steps ST3 and ST4.

If determining that the indoor unit 12 is included in the air conditioner 1 in FIG. 5 (step ST3), the MCU 303 selects use of the low-frequency receiving circuit 305 as the communication circuit to be used in a first communication state for recognizing physical connection with the outdoor unit 11. In other words, the first communication state is a communication state for performing system recognition. The indoor unit 12 of the air conditioner 1 in FIG. 5 uses the signal wiring Sg3 and the low-frequency receiving circuit 305 to make selection related to communication for performing system recognition using a low-frequency voltage signal. This system recognition enables communication for operation of the air conditioner 1 in FIG. 5 between the outdoor unit 11, the indoor unit 12, and the centralized controller 4. After the system recognition is completed, the MCU 303 selects use of the high-frequency transceiver circuit 304 (the second communication device 30) as the communication circuit in which communication for operation of the air conditioner 1 in FIG. 5 is performed with the outdoor unit 11. In the communication for the operation of the air conditioner 1 in FIG. 5 in which the indoor unit 12 is directly connected to the second power supply 902 that is the second power supply, transmission and reception by a high-frequency voltage signal are performed between the outdoor unit 11 and the indoor unit 12 by using the high-frequency transceiver circuit 304 and the signal wiring Sg3. The air conditioner 1 in FIG. 5 has a second communication mode in which the low-frequency transmitting circuit 205 and the low-frequency receiving circuit 305 perform fourth wired communication by using the signal wiring Sg3, and the high-frequency transceiver circuit 204 and the high-frequency transceiver circuit 304 perform third wired communication by using the signal wiring Sg3. In the second communication mode, high-frequency communication used for air conditioning of the indoor unit 12 and low-frequency communication for system recognition are transmitted through the same signal wiring Sg3.

If determining that the indoor unit 12 is included in the air conditioner 1 in FIG. 3 (step ST4), the MCU 303 selects use of the low-frequency transceiver circuit 306 as the communication circuit to be used in the communication state for performing system recognition. The indoor unit 12 of the air conditioner 1 in FIG. 3 make selection related to communication for performing system recognition by a low-frequency current signal by using the low-frequency transceiver circuit 306 and the current loop wiring CL. This system recognition enables communication for operation of the air conditioner 1 in FIG. 3 between the outdoor unit 11 and the indoor unit 12. After the system recognition is completed, the MCU 303 selects use of the high-frequency transceiver circuit 304 as the communication circuit to be used in the second communication state in which communication for operation of the air conditioner 1 in FIG. 2 is performed with the outdoor unit 11. In the communication for operation of the air conditioner 1 in FIG. 3, transmission and reception using a high-frequency voltage signal are performed between the outdoor unit 11 and the indoor unit 12, by using the high-frequency transceiver circuit 304 and the current loop wiring CL. In the air conditioner 1 in FIG. 3, high-frequency communication used for air conditioning by the indoor unit 12 and low-frequency communication for system recognition are transmitted and received through the same current loop wiring CL. In other words, the air conditioner 1 in FIG. 3 has a first communication mode.

The air conditioner 1 shown in FIGS. 1 and 2 performs, for communication between the outdoor unit 11 and the indoor unit 12, high-frequency communication used for air-conditioning control and low-frequency communication for checking device connection in the system by using the same communication track, as in the air conditioner 1 in FIG. 3. The air conditioner 1 uses signals of at least two different frequencies of a high-frequency signal and a low-frequency signal for system recognition. The high-frequency signal is a signal having a higher frequency than the low-frequency signal. Here, communication performed using the high-frequency signal is high-frequency communication, and communication performed using the low-frequency signal is low-frequency communication. For example, the high-frequency signal is a signal having a frequency of 100 kHz or more, and the low-frequency signal is a signal having a frequency of 10 kHz or less. The air conditioner 1 can perform communication in a wiring to which either a high voltage (in the present disclosure, for example, 50 volt or more) or a low voltage (in the present disclosure, for example, less than 50 volts) is applied. A high voltage is applied to the power supply wiring W. In the signal wirings Sg1, Sg2, and Sg3, communication by a low-voltage signal is performed. A wiring method of the first outdoor unit 11a, the second outdoor unit 11b, and the centralized controller 4 may be a wiring method other than a wiring method in FIG. 3. For example, the first outdoor unit 11a and the second outdoor unit 11b may be connected by a signal wiring, and the centralized controller 4 may be connected to the first outdoor unit 11a or the second outdoor unit 11b. The centralized controller 4 may be connected to one of the plurality of indoor units 12.

### (3-3) Communication for system recognition

As described above, the air conditioners 1 shown in FIGS. 1 and 2 transfer thermal energy by using a refrigerant between the outdoor unit 11 and the plurality of indoor units 12, in order to make the refrigerant circulate between the outdoor unit 11 and the plurality of indoor units 12 to perform air conditioning of a target space. Therefore, the air conditioner 1 in FIGS. 1 and 2 recognizes a communication target in accordance with the circulation of the refrigerant before performing an operation for air conditioning. In the air conditioner 1 in FIGS. 1 and 2, the recognition of the communication target suitable for the circulation of the refrigerant is system recognition.

A concept of system recognition common in the present disclosure is to recognize devices belonging to the same system related to the same medium that carries thermal energy. The outdoor unit 11 and the indoor units 12, which constitute a physically connected path that carries thermal energy for performing air conditioning, belong to the same system recognized by the system recognition, along with the centralized controller 4, which is used for management or operation of the outdoor unit 11 and the indoor units 12. The medium that carries thermal energy includes a refrigerant used in a vapor compression refrigeration cycle, air used in a total air heat transport system, and water or a heat medium made circulate while managing a liquid temperature.

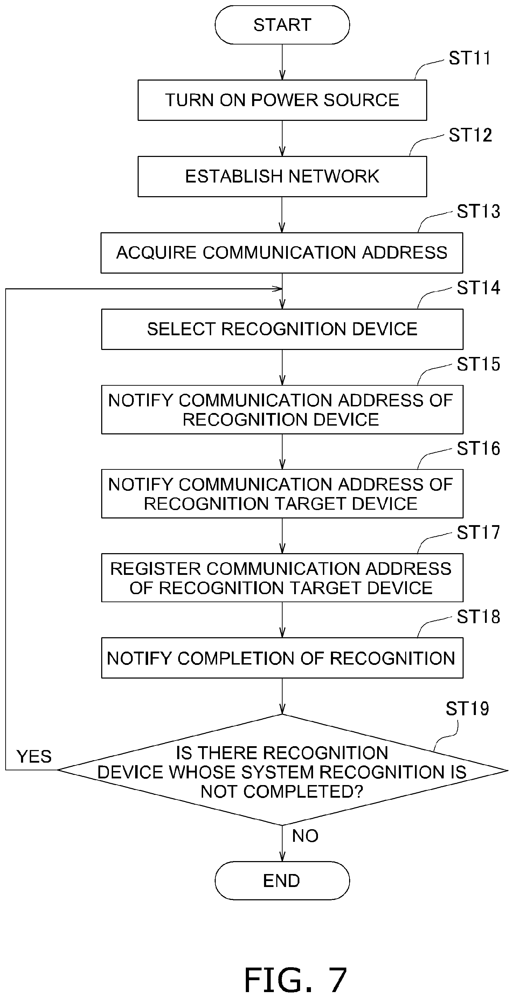

An example of communication of the air conditioner 1 for performing system recognition will be described with reference to FIG. 7. Hereinafter, the system recognition using the current loop wiring CL will be described, but the system recognition may be performed by using the signal wiring Sg1 (or Sg2). First, a power supply of the air conditioner 1 is turned on in order to perform communication for system recognition (step ST11). In the air conditioner 1, for example, the outdoor unit 11 establishes a network for communication by transmitting and receiving a communication signal to and from a constituent device connected to the current loop wiring CL, by using a high-frequency signal (step ST12).

After establishment of the network, each of the outdoor unit 11 and the indoor units 12 acquires a communication address (step ST13). The outdoor unit 11 and the indoor units 12 have a function of automatically acquiring a communication address by using the MCUs 203 and 303. The outdoor unit 11 and the indoor units 12 can acquire communication addresses that do not overlap with each other, by using the functions described above.

In a case where the outdoor unit 11 or the centralized controller 4 is provided, the outdoor unit 11 and the centralized controller 4 cooperate through communication using a high-frequency signal, and select one recognition device on the network (step ST14). In a case of the air conditioner 1 in FIG. 1, for example, the first outdoor unit 11a, the second outdoor unit 11b, and the centralized controller 4 are in a competitive relationship, but any of them is set in advance to be selected. For example, among the first outdoor unit 11a, the second outdoor unit 11b, and the centralized controller 4, a device that has previously transmitted a high-frequency signal is set to be selected as a recognition device. In a case of the air conditioner 1 in FIG. 2, since there is no device in a competitive relationship, the recognition device is determined to be the outdoor unit 11.

The air conditioner 1 in FIG. 1 will be described below. In the air conditioner 1 in FIG. 1, for example, a case where the first outdoor unit 11a is selected will be described. When the first outdoor unit 11a is selected, the second outdoor unit 11b and the centralized controller 4 change a role from a candidate of the recognition device to a recognition target device. Changing the role from the candidate for the recognition device to the recognition target device means that, in other words, the second outdoor unit 11b and the centralized controller 4 can receive a low-frequency signal sent from the first outdoor unit 11a.

The selected recognition device transmits a low-frequency signal in order to recognize the refrigerant system (step ST15). For example, when the first outdoor unit 11a is selected, the first outdoor unit 11a transmits a low-frequency signal to the current loop wiring CL and the signal wiring Sg1 to recognize the first refrigerant system RS1. The low-frequency signal transmitted by using the current loop wiring CL and the first signal wiring Sg1 is not transmitted to the second outdoor unit 11b, the fourth indoor unit 12d, the fifth indoor unit 12e, and the sixth indoor unit 12f connected to the second signal wiring Sg2. In order to prevent the low frequency signal transmitted to the current loop wiring CL and the first signal wiring Sg1 from being transmitted to the signal wiring Sg2, for example, the current loop wiring CL, the first signal wiring Sg1, and the signal wiring Sg2 are connected via a high pass filter (not shown) that allows passage of a high-frequency signal but does not allow passage of a low-frequency signal.

The first outdoor unit 11a transmits the own communication address with a high-frequency signal simultaneously with transmission of the low-frequency signal or before or after transmission of the low-frequency signal. The first indoor unit 12a, the second indoor unit 12b, the third indoor unit 12c, and the centralized controller 4 having received the low-frequency signal through the current loop wiring CL and the first signal wiring Sg1 and having received the communication address of the first outdoor unit 11a with the high-frequency signal store the received communication address (communication address of the first outdoor unit 11a) into a memory (not shown) of each MCU.

The recognition target device having received the low-frequency signal and the communication address of the recognition device transmits the own communication address to the communication address of the recognition device, by using a high-frequency signal (step ST16). When the first outdoor unit 11a is selected, the first indoor unit 12a, the second indoor unit 12b, the third indoor unit 12c, and the centralized controller 4 transmit the own communication addresses to the communication address of the first outdoor unit 11a through the current loop wiring CL and the first signal wiring Sg1, by using a high-frequency signal. When the first outdoor unit 11a is selected, the second outdoor unit 11b, the fourth indoor unit 12d, the fifth indoor unit 12e, and the sixth indoor unit 12f have not received the low-frequency signal from the first outdoor unit 11a, and thus do not transmit the own communication addresses to the first outdoor unit 11a.

The selected recognition device registers the constituent device having the sent communication address of the recognition target device, into the same system list (step ST17). When the first outdoor unit 11a is selected, the first outdoor unit 11a sequentially adds, to the same system list, the communication addresses of the first indoor unit 12a, the second indoor unit 12b, the third indoor unit 12c, and the centralized controller 4 sent to the own communication addresses through the current loop wiring CL and the first signal wiring Sg1. By holding the same system list, the first outdoor unit 11a can recognize which constituent device other than the first outdoor unit 11a is a constituent device belonging to the first refrigerant system RS1.

Upon completing the registration of all the recognition target devices in the refrigerant system to which the selected recognition device belongs, the selected recognition device notifies the entire network that the system recognition of the refrigerant system to which the selected recognition device belongs is completed (step ST18). When the first outdoor unit 11a is selected, upon completing the registration of the constituent devices connected to the current loop wiring CL and the first signal wiring Sg1, the first outdoor unit 11a notifies the entire network that the system recognition of the first refrigerant system RS1 is completed, through the current loop wiring CL and the first signal wirings Sg1 and Sg2.

Upon receiving the notification that the system recognition of one refrigerant system is completed, it is determined whether there is a recognition device whose system recognition is not completed (step ST19). If the first outdoor unit 11a is selected first, the system recognition of the second refrigerant system RS2 by the second outdoor unit 11b is not completed even if the system recognition by the first outdoor unit 11a is completed (Yes in step ST19). In such a case, the outdoor unit 11 and the centralized controller 4 cooperate through communication using a high-frequency signal, and select the second outdoor unit 11b as the recognition device (step ST14). After the second outdoor unit 11b is selected as the recognition device, the operations from step ST15 to step ST19 are repeated as in the case where the first outdoor unit 11a is selected. Through these operations, system recognition of the constituent devices of the second refrigerant system RS2 is performed.

In the example of the communication for the system recognition described above, a case has been described in which a communication destination or a communication source is specified using the communication address, through communication using a high-frequency signal through the current loop wiring CL and the first signal wirings Sg1 and Sg2. However, the specification of the communication destination or the communication source is not limited to the specification using the communication address. For example, the air conditioner 1 may be configured to specify the communication destination or the communication source by using a unique ID owned by each of the plurality of outdoor units 11, the plurality of indoor units, and the centralized controller 4.

### (4) Suppression of leakage of communication signal

### (4-1) Suppression of high-frequency noise by using current loop wiring CL

In the first communication mode, in the air conditioner 1, both the first communication device 20 and the second communication device 30 perform first wired communication and second wired communication by using the first power supply line PL1 and the first signal line SL1. In particular, in the second wired communication, when viewed from the first power supply 901, the first power supply line PL1 and the second power supply line PL2 are not used, and a high-frequency voltage signal (first voltage signal) is generated only in the first power supply line PL1. As a result, the high-frequency noise transmitted to the first power supply 901 due to the first voltage signal is smaller in the case of transmitting the first voltage signal by using the first power supply line PL1 and the first signal line SL1 than in the case of transmitting the first voltage signal by using the first power supply line PL1 and the second power supply line PL2.

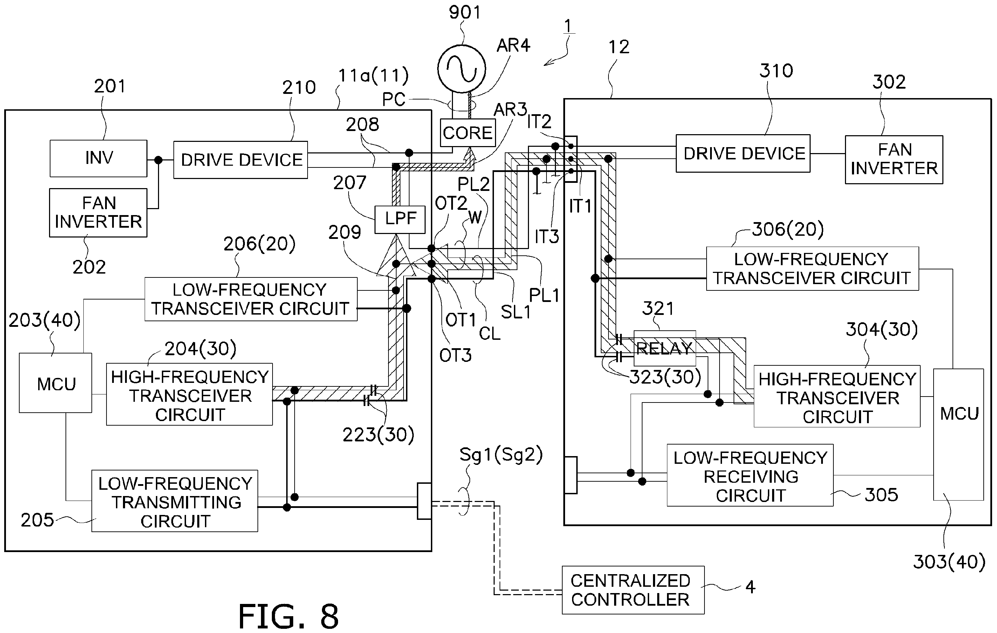

When the first voltage signal transmitted through the current loop wiring CL is a differential signal, the high-frequency noise transmitted to the first power supply 901 in the case of transmitting the first voltage signal by using the first power supply line PL1 and the first signal line SL1 is significantly suppressed as compared with the case of transmitting the first voltage signal by using the power supply wiring W. In the air conditioner 1 in FIG. 8, the suppression of the high-frequency noise caused by the first voltage signal passing through a path indicated by an arrow AR1 passing through the first power supply line PL1 in a path from the high-frequency transceiver circuit 304 to the first power supply 901 becomes remarkable.

Similarly, when the first voltage signal is transmitted from the high-frequency transceiver circuit 204 of the second communication device 30 to the high-frequency transceiver circuit 304 and when the first voltage signal is transmitted from the high-frequency transceiver circuit 304 of the second communication device 30 to the high-frequency transceiver circuit 204, the high-frequency noise transmitted to the first power supply 901 can be suppressed by using the first power supply line PL1 and the second power supply line PL2.

### (4-2) Suppression of high-frequency noise by low pass filter 207

The low pass filter 207 is a filter that reduces noise having the same frequency as the frequency of the first voltage signal. The low pass filter 207 is disposed in the internal wiring 209. The internal wiring 209 is disposed between the second communication device 30 and the first power supply 901. Therefore, the low pass filter 207 is disposed between the second communication device 30 and the first power supply 901. Therefore, the first voltage signal (high-frequency voltage signal) output from the high-frequency transceiver circuit 203 of the second communication device 30 mainly passes through the internal wiring 209 and the like indicated by an arrow AR2, passes through the low pass filter 207, and is delivered to the first power supply 901. The reduced high-frequency noise travels through the path of an arrow AR3 toward the core 15. The high-frequency signal is reduced when passing through the low pass filter 207. Examples of paths other than the path indicated by the arrow AR2 include a path via the signal wiring Sg1 (or Sg2). However, since the first voltage signal having passed through the path via the signal wiring Sg1 (or Sg2) passes through the path indicated by the arrow AR1, the first voltage signal is reduced by the low pass filter 207 in the same manner as the first voltage signal output from the high-frequency transceiver circuit 304 described later. As described above, the first voltage signal (high-frequency voltage signal) output from the high-frequency transceiver circuit 304 of the second communication device 30 mainly passes through the first power supply line PL1 indicated by the arrow AR1, passes through the low pass filter 207, and is delivered to the first power supply 901. The high-frequency signal is reduced when passing through the low pass filter 207. Examples of paths other than the path indicated by the arrow AR1 include a path via the signal wiring Sg1 (or Sg2). However, since the first voltage signal having passed through the path via the signal wiring Sg1 (or Sg2) passes through the internal wiring 209 indicated by the arrow AR2 and the like, the first voltage signal is reduced by the low pass filter 207 in the same manner as the first voltage signal output from the high-frequency transceiver circuit 204.

### (4-3) Suppression of high-frequency noise by core 15

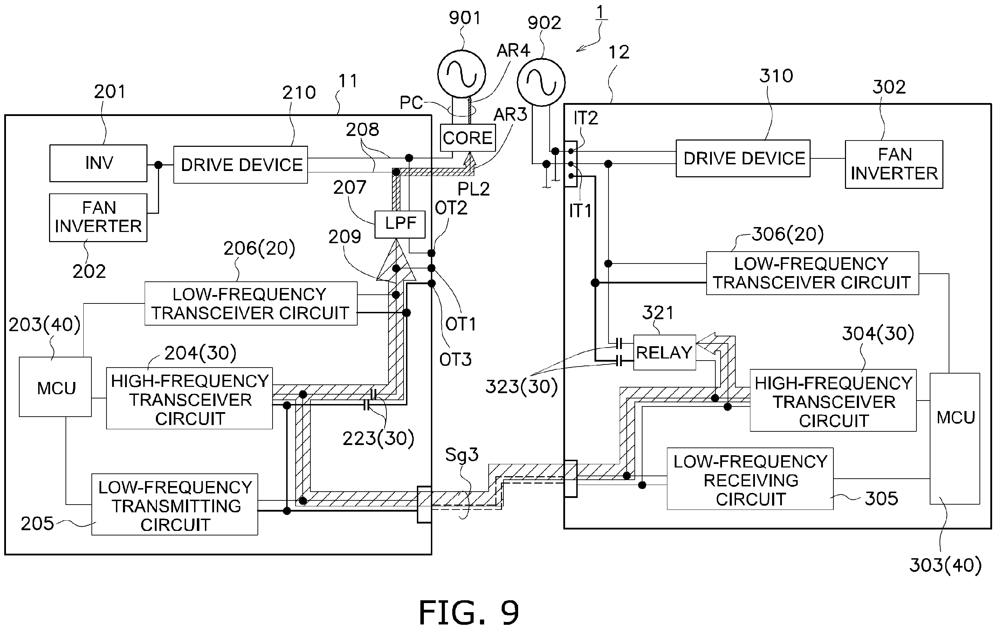

The core 15 is the first electric component that increases the value of an impedance of a wiring as viewed from the outdoor unit 11 toward the first power supply 901. The core 15 is connected between the outdoor unit 11 and the first power supply 901. The core 15 increases the value of an impedance for the same frequency as the first voltage signal. The high-frequency noise transmitted to the first power supply 901 through the core 15 shown in FIGS. 8 and 9 is mainly caused by the first voltage signal output from the second communication device 30. In the air conditioner 1 in FIG. 8, the first voltage signal output from the second communication device 30 is attenuated by the low pass filter 207 and then further reduced by the core 15. The high-frequency noise reduced by the core 15 travels from the core 15 toward the first power supply 901 through a path indicated by an arrow AR4. In the air conditioner 1 shown in FIGS. 8 and 9, the first voltage signal passes through the low pass filter 207 before passing through the core 15. However, even when the low pass filter 207 is not provided, the core 15 can reduce the high-frequency noise transmitted to the first power supply 901.

### (4-4) Suppression of high-frequency noise by relay 321

As shown in FIGS. 5 and 9, when the indoor unit 12 is connected to the second power supply 902, the high-frequency noise caused by the first voltage signal to the second power supply 902 is blocked by the relay 321. The relay 321 is a second electric component that disconnects the connection between the second communication device 30 and the power input terminals IT1 and IT2 when the second power supply 902 is connected to the power input terminals IT1 and IT2. The relay 321 is configured to disconnect the connection between the second communication device 30 and the power input terminals IT1 and IT2 in response to an instruction of the MCU 303, for example, when communication between the low-frequency transceiver circuits 206 and 306 cannot be performed. In other words, for example, the relay 321 is configured to disconnect the connection between the high-frequency transceiver circuit 304 and the power input terminals IT1 and IT2 in response to an instruction of the MCU 303 when the current loop communication by the first communication device 20 cannot be performed. When the relay 321 is opened, the connection is disconnected in a path through which the first voltage signal indicated by an arrow AR5 in FIG. 9 passes. A path through which the first voltage signal output from the high-frequency transceiver circuit 204 passes through the signal wiring Sg1 (or Sg2) is included in the path indicated by the arrow AR5.

### (5) Modification

### (5-1) Modification 1A

In the above embodiment, a case has been described where the low-frequency transceiver circuits 206 and 306 constituting the first communication device 20 can transmit and receive the current loop communication. Alternatively, a low-frequency receiving circuit capable of only reception may be used instead of the low-frequency transceiver circuit 306 of the indoor unit 12, and a low-frequency transmitting circuit may be used as the low-frequency transceiver circuit 206 of the outdoor unit 11.

### (6) Characteristics

(6-1)
In the air conditioner 1 described above, the first wired communication and the second wired communication are performed by using the first power supply line PL1 and the first signal line SL1. The first wired communication is current loop communication performed by the first communication device 20 by using the first power supply line PL1 and the first signal line SL1. The second wired communication is communication by the first voltage signal performed by the second communication device 30 by using the first power supply line PL1 and the first signal line SL1. Since the first power supply line PL1 and the first signal line SL1 are used for the first wired communication and the second wired communication, noise generated in communication is less likely to be transmitted to the first power supply 901 than in a case where only the power supply wiring W (the first power supply line PL1 and the second power supply line PL2) is used for the first wired communication and the second wired communication.

(6-2)
The outdoor unit 11 includes the low pass filter 207 that is disposed in the internal wiring 209 between the second communication device 30 and the first power supply 901 and reduces noise having the same frequency as the frequency of the first voltage signal. The air conditioner 1 can reduce the first voltage signal transmitted as high-frequency noise from the second communication device 30 to the first power supply 901 by the low pass filter 207.

(6-3)
The air conditioner 1 described above includes the core 15 as the first electric component connected between the outdoor unit 11 and the first power supply 901. The core 15 is the first electric component that increases the value of an impedance of a wiring as viewed from the outdoor unit 11 toward the first power supply 901 for the same frequency of the frequency of the first voltage signal. In the air conditioner 1, since the value of the impedance for the same frequency as the frequency of the first voltage signal can be increased by the core 15, the first voltage signal transmitted from the second communication device 30 to the first power supply 901 can be reduced.

(6-4)
In the air conditioner 1 described above, a case has been described where the first voltage signal is a differential signal and is a signal that generates a potential difference between the first power supply line PL1 and the first signal line SL1. Since such a first voltage signal decreases the change in the potential difference generated between the first power supply line PL1 and the line other than the first signal line SL1, the high-frequency noise caused by the first voltage signal superimposed on the power supply wiring W is reduced, and the noise caused by the first voltage signal is prevented from being transmitted to the first power supply 901.

(6-5)
The indoor unit 12 includes the relay 321 as the second electric component that disconnects the connection between the second communication device 30 and the power input terminals IT1 and IT2 when the second power supply 902 is connected to the power input terminals IT1 and IT2. Therefore, in the air conditioner 1, the relay 321 can block noise transmitted from the second communication device 30 to the second power supply 902.

(6-6)
In some cases, the second communication device 30 of the air conditioner 1 described above uses the signal wiring Sg3 that is a second signal line connecting the outdoor unit 11 and the indoor unit 12 and being different from the first signal line SL1. The air conditioner 1 has the second communication mode in which the third wired communication is performed with the second voltage signal having a lower voltage than the first voltage signal, and the current loop wiring CL does not connect the outdoor unit 11 and the indoor unit 12 in some cases. In such a case, noise caused by the second voltage signal used by the second communication device 30 in the third wired communication can be blocked by the relay 321 that is the second electric component.

The embodiments of the present disclosure have been described above. It will be understood that various changes to modes and details can be made without departing from the gist and scope of the present disclosure recited in the claims.

### REFERENCE SIGNS LIST

1: air conditioner
11, 11a, 11b: outdoor unit
12, 12a to 12f: indoor unit
15: core (example of first electric component)
20: first communication device
30: second communication device
207: low pass filter
209: internal wiring
321: relay (example of second electric component)

### CITATIONS LIST

### PATENT LITERATURE

Patent Literature 1: JP 2005-127579 A

## Claims

1. An air conditioner (1) comprising:
an indoor unit (12, 12a to 12f) including power input terminals that receive power supply;
an outdoor unit (11, 11a, 11b) connected to a first power supply and including power supply terminals that supply power from the first power supply;
a first communication device (20) that performs first wired communication by a current loop; and
a second communication device (30) that performs second wired communication by a first voltage signal,
wherein the air conditioner (1) has a first communication mode in which, when the power input terminal and the power supply terminal are connected by a first power supply line in order to supply power from the outdoor unit to the indoor unit, and the indoor unit and the outdoor unit are connected by a first signal line in the first communication device and the second communication device, the first communication device performs the first wired communication by using the first signal line and the first power supply line, and the second communication device performs the second wired communication by using the first power supply line and the first signal line.

2. The air conditioner (1) according to claim 1, wherein the outdoor unit includes an internal wiring (209) between the second communication device and the first power supply, and a filter (207) that is disposed in the internal wiring and reduces noise having a same frequency as a frequency of the first voltage signal.

3. The air conditioner (1) according to claim 1 or 2, further comprising a first electric component (15) connected between the outdoor unit and the first power supply,
wherein the first electric component increases a value of an impedance of a wiring viewed from the outdoor unit toward the first power supply for the same frequency as the first voltage signal.

4. The air conditioner (1) according to any one of claims 1 to 3, wherein the first voltage signal is a differential signal.

5. The air conditioner (1) according to any one of claims 1 to 4, wherein the indoor unit includes a second electric component (321) that disconnects connection between the second communication device and the power input terminals when a second power supply is connected to the power input terminals.

6. The air conditioner (1) according to claim 5, having a second communication mode in which the second communication device performs third wired communication by a second voltage signal having a lower voltage than the first voltage signal by using a second signal line connecting the outdoor unit and the indoor unit and being different from the first signal line.
